Europäisches Patentamt

European Patent Office

Office européen des brevets

(19)

(11) Veröffentlichungsnummer: **0 001 591**
B1

(12) **EUROPÄISCHE PATENTSCHRIFT**

(21) Anmeldenummer: **78101062.4**

(22) Anmeldetag: **04.10.78**

(51) Int. Cl.³: **C 04 B 11/00**

(54) Verfahren zur Herstellung von wässrigen Calcium-sulfat-Halbhydrat-Suspensionen und deren Verwendung.

(30) Priorität: **26.10.77 DE 2747921**

(43) Veröffentlichungstag der Anmeldung:
**02.05.79 Patentblatt 79/9**

(45) Bekanntmachung des Hinweises auf die Patenterteilung:
**18.02.81 Patentblatt 81/7**

(84) Benannte Vertragsstaaten:
**BE DE FR NL**

(56) Entgegenhaltungen:
**DE - A - 2 246 345**
**DE - A - 2 354 647**
**DE - A - 2 557 594**
**DE - A - 2 609 123**
**DE - C - 676 554**
**FR - A - 1 184 018**
**FR - A - 1 575 054**

(73) Patentinhaber: **HOECHST AKTIENGESELLSCHAFT**
**D-6230 Frankfurt am Main 80 (DE)**

(72) Erfinder: **Gradl, Reinhard, Dr.**
**Am Grünen Weg 6**
**D-5030 Hürth (DE)**

(72) Erfinder: **Schwartz, Günther**
**Am Hummerlsboor 1**
**D-5030 Hürth (DE)**

EP 0 001 591 B1

Courier Press, Leamington Spa, England.

## Verfahren zur Herstellung von wäßrigen Calciumsulfat- Halbhydrat-Suspensionen und deren Verwendung

Die vorliegende Erfindung betrifft ein Verfahren zur Herstellung von gezielt abbindenden wäßrigen Calciumsulfat-Halbhydrat-Suspensionen sowie deren Verwendung.

Vollständig oder teilweise dehydratisiertes Calciumsulfat vermag, mit Wasser angerührt, eine mehr oder weniger schnell erstarrende, feste, zusammenhängende Masse zu bilden. Diese, auf der Bildung von Calciumsulfat-Dihydrat beruhende Eigenschaft wird in vielen industriellen Bereichen, hauptsächlich aber im Baugewerbe, genutzt. In der Praxis spielt dabei vor allem der zeitliche Ablauf der Verfestigung eine große Rolle. Man unterscheidet Versteifungsbeginn und Versteifungsende, die wie folgt definiert sind.

Der zu messende Gipsbrei wird in einen Hartgummiring von etwa 40 mm Höhe eingefüllt. Auf die Oberfläche des Gipsbreies wird eine Nadel von 12 g Gewicht, die einen Durchmesser von 8 mm hat und in eine Nadelspitze von 1 mm Durchmesser konisch ausläuft, aufgesetzt und plötzlich losgelassen. Als Versteifungsbeginn wird die Zeit angegeben, die vom Beginn des Mischens von Wasser und Calciumsulfat-Halbhydrat bis zu dem Zeitpunkt vergangen ist, wo eine aufgesetzte Nadel den Kuchen nicht mehr ganz durchdringt.

Als Versteifungsende gilt die Zeit, die von dem Mischen an verstrichen ist, bis eine auf dem Gipsbrei aufgesetzte Nadel höchstens nur noch 2 mm eintaucht.

Abbindefähige wäßrige Calciumsulfat-Halbhydrat-Suspensionen weisen in der Regel Gewichtsverhältnisse von Calciumsulfat-Halbhydrat: Wasser von 1:1 bis 5:1, vorzugsweise 1,5:1 bis 4,5:1 auf..

Es hat in der Vergangenheit nicht an Versuchen gefehlt, durch bestimmte Zusätze das Abbindeverhalten wäßriger Calciumsulfatmaischen zu beeinflussen.

Aus der Vielzahl der für diese Zwecke eingesetzten Stoffe seien in diesem Zusammenhang nur Phosphorsäure und deren Salze als Abbindeverzögerer sowie Aluminiumchlorid, Schwefel-, Salpeter- und Chlorwasserstoffsäure als Abbindebeschleuniger gennant (Ziegelindustrie, *19* (1966), Seiten 454 bis 458; F. Graf und F. Rausch, Zement-Kalk-Gips, *4.* (1951), Seiten 117 bis 123).

Ferner ist aus der DE—B 2 418 608 bekannt, wasserlösliche Aluminiumfluoride oder deren Hydrate als Abbindeverzögerer für Calciumsulfat-Halbhydrat im neutralen oder sauren Bereich einzusetzen, wobei die verzögernde Wirkung dieser Aluminiumsalze durch Zugabe geringer Mengen starker Säuren gesteigert und durch Zufügung entsprechender Mengen an alkalischen Substanzen beendet werden kann.

Gemäß der FR—A—1.184.018 ist auch schon versucht worden, die Abbindezeit eines Gipsbreies durch Zugabe eines löslichen Kupfersalzes in Verbindung mit einem Alkaliorthophosphat zum Anmachwasser zu verzögern. Hierbei müssen die Verzögerungsmittel wiederholt in kleineren Portionen zugegeben werden, damit sich zunächst unlösliches Kupferphosphat in Form kleiner blasiger Körner bildet. Durch Zugabe eines löslichen Zinksalzes in Verbindung mit einem Alkalisulfat kann anschließend die Wirkung der Verzögerungsmittel wieder aufgehoben werden.

Alle diese bekannten Verfahren weisen jedoch einige Nachteile auf.

Das Verfahren gemäß FR—A—1.184.018 ist umständlich und erfordert auch ein exaktes Arbeiten bei den Dosierungen.

Durch die sonstigen bislang eingesetzten Mittel wird der Abbindevorgang nicht strikt unterbrochen, sondern nur verzögert, so daß während der Verzögerungszeit die Viskosität des Gipsbreies mehr oder weniger langsam ansteigt. Dies hat zur Folge, daß der Brei in Abhängigkeit von der Zeit unterschiedliche Verarbeitungsmerkmale aufweist und nicht einheitliche Fertigungsprodukte liefert. Hierzu kommt, daß die Löslichkeit mancher Verzögerungsmittel, wie z.B. der Aluminiumfluoride, in Wasser nur gering ist, so daß nur Abbindeverzögerungen von wenigen Stunden, bestenfalls 2 Tagen, erreicht werden können.

Wird ein einmal angemachter Gipsbrei nicht in der durch einen solchen Verzögerer eingestellten Zeit verarbeitet, muß er verworfen werden. Deshalb müssen bei größeren Objekten, z.B. beim Verputzen von sehr großen Flächen, mehrmals kleinere Mengen angemacht werden, was zu erheblichen Zeitverlusten (Reinigung der Gefäße, Abmessen der Mengen, Mischvoprgänge) und gegebenenfalls zu Unterschieden in der Zusammensetzung der einzelnen Chargen führt. Außerdem wird durch die Verwendung bekannter Verzögerer nicht nur der Versteifungsanfang verlängert, um eine ausreichende Verarbeitungszeit zu erzielen, sondern auch, und zwar in verstärktem Maße, die Zeit zwischen dem Versteifungsanfang und dem Versteifungsende, so daß es dadurch zu unnötigen Wartezeiten kommt und nachfolgende Arbeiten bzw. der Baufortgang verzögert werden.

Schließlich bewirken die meisten dieser Substanzen andere negative Eigenschaften, wie z.B. Ausblühungen, verminderte Festigkeiten in den Endprodukten oder führen sogar zur "Versandung"; d. h. der Gipsbrei wandelt sich zwar in Dihydrat um, ergibt aber keine zusammenhängende, feste Masse, sondern ein loses Dihydratpulver.

Bei der hydrothermalen Halbhydratherstellung aus Abfallgips in der chemischen Industrie, z.B. bei der Phosphorsäuregewinnung, wird das Calciumsulfatdihydrat in Druckbehältern umgesetzt. Bei technischen Störungen (nicht öffnende Ventile, Rührer-, Temperatur-, Druckausfall) würde die gesamte Halbhydratmaische innerhalb weniger Minuten abbinden. Durch Zusatz von bekannten Verzögerern können nur wenige Stunden Zeit gewonnen werden. Nach erfolgter Beseitigung der Störung muß dann in den meisten Fällen die gesamte Masse verworfen werden.

Auch die bei störungsfreiem Verfahrensablauf in dem Druckbehälter anfallende wäßrige Calciumsulfat-Halbhydratmaische muß entweder sofort auf nassem Weg, z.B. zu Zwischenwandplatten weiterverarbeitet oder ohne abzukühlen filtriert und zu Pulver getrocknet werden.

Es is daher wünschenswert, diese Maische auch nach dem Abkühlen, nicht nur in Störungsfällen, für eine gewisse Zeit zu stabilisieren, sondern sie auch direkt als Ausgangsmaterial für Herstellungsverfahren von Baustoffmassen selbstnivellierende Estriche, poröse Gipsmassen usw. verwenden zu können, wie sie beispielsweise in der DE—A—2 557 594 und DE—A—2 534 427 beschrieben sind.

Aufgabe der vorliegenden Erfindung war es daher, entweder eine aus Pulvergips — also trockenem Calciumsulfat-Halbhydrat — und Wasser hergestellte oder eine bereits vorliegende Suspension — beispielsweise eine bei der hydrothermalen Umwandlung von Gipsgestein oder Abfallgipsen aus der chemischen Industrie direkt anfallende Calciumsulfat-Halbhydrat-Maische — durch Zusätze so zu stabilisieren, daß der Abbindevorgang praktisch völlig unterbunden wird, diese Unterbindung doch zu jedem gewünschten Zeitpunkt durch Zusatz einer geeigneten Substanz wieder aufgehoben werden kann, mit der Folge, daß das Calciumsulfat-Halbhydrat dann in üblicher Zeit abbindet und das entstandene Dihydrat dieselben Eigenschaften besitzt, wie ein aus Halbhydrat ohne Stabilisator hergestelltes Produkt.

Überraschenderweise wurde gefunden, daß sich diese Aufgabe auf einfachem Wege lösen läßt, wenn man entweder Calciumsulfat-Halbhydrat mit 0,01 bis 2 Gewichts%, vorzugsweise 0,1 bis 1,0 Gewichts%, Pyrophosphat, gerechnet als Pyrophosphationen, und 0,01 bis 1 Gewichts%, vorzugsweise 0,05 bis 0,1 Gewichts%, von Chloriden dreiwertiger Metalle vermischt und mit Wasser zu einer abbindefähigen Calciumsulfat-Halbhydrat-Suspensionen anmaischt oder einer vorliegenden, abbindefähigen wäßrigen Calciumsulfat-Halbhydrat-Suspensionen die genannten Mengen an Pyrophosphaten und Chloriden, bezogen auf das Calciumsulfat-Halbhydrat, zumischt. Dadurch unterbindet man das Abbinden der Calciumsulfat-Halbhydrat-Suspension und löst erst nach einer gewünschten Zeit das Abbinden des Calciumsulfat-Halbhydrates wieder aus, indem man den pH-Wert des erhaltenen Gemisches durch Zugabe von Säuren um mehr als 0,3 pH, vorzugsweise um 0,3 bis 2,3 pH, erniedrigt.

Als Pyrophosphate eignen sich in erster Linie solche des Ammoniums, Natriums, Kaliums, Calciums, Magnesiums, Eisens II, Kupfers, Zinks oder ein Gemisch aus diesen Pyrophosphaten, während man als Chloride dreiwertiger Metalle bevorzugt solche de Aluminiums, Eisens III, Chroms III oder ein Gemisch aus diesen Chloriden einsetzt.

Als Säuren eignen sich vor allem Mineralsäuren, wie Phosphorsäure, Schwefelsäure, Salpetersäure oder Salzsäure.

Ein weiterer Gegenstand der vorliegenden Erfindung ist die Verwendung der erfindungsgemäß gewonnenen, gezielt abbindenden Calciumsulfat-Halbhydrat-Suspensionen, entweder als Baumasse für selbstnivellierende Estriche oder zur Herstellung von porösen Gipsmassen.

Zwar ist, wie bereits oben erwähnt, die Verwendung von Phosphaten als Abbindeverzögerer bereits bekannt, doch gilt Aluminiumchlorid, d.h. ein Chlorid eines dreiwertigen Metalles, als ausgesprochener Abbindebeschleuniger. Es war somit neu und für einen Fachmann nicht vorhersehbar, daß Chloride dreiwertiger Metalle in Verbindung mit ganz bestimmten Phosphaten, nämlich Pyrophosphaten, dazu verwendet werden können, den Abbindevorgang wäßriger Calciumsulfat-Halbhydrat-Suspensionen nicht für eine relativ kurze Zeit zu verzögern, sondern für Wochen und Monate zu unterbinden, ohne daß ein Viskositätsanstieg der Suspension zu verzeichnen ist.

Nachdem es von älteren Arbeitsweisen (DE—B—2 418 608) her bekannt war, durch Zugabe von alkalisch reagierenden Substanzen die durch Abbindeverzögerer bewirkte Beeinflussung des Abbindeverhaltens von Calciumsulfat-Halbhydrat wieder aufzuheben, war es ferner überraschend, daß im vorliegenden Falle die erreichte Abbindeunterbindung durch Zugabe von stark sauer reagierenden Substanzen beendet werden kann.

Unter Calciumsulfat-Halbdydrat im Sinne des erfindungsgemäßen Verfahrens sind alle mit Wasser abbindenden wasserarmen Formen des Calciumsulfates zu verstehen, insbesondere $\alpha$- und $\beta$-Halbhydrat natürlicher oder synthetischer Herkunft.

Diese Bedingungen erfüllt z.B. durch Brennen aus natürlichem Gipsgestein hergestellter Stuckgips oder Handelsüblicher Hartgips, gewonnen durch hydrothermale Umwandlung von Calciumsulfat-Dihydrat oder auch synthetische Gipse aus Rauchgasentschwefelungsanlagen oder Abfallgips aus der Flußsäureherstellung.

Als Pyrophosphate können sowohl primäre, sekundäre, tertiäre als auch quartäre Pyrophosphate eingesetzt werden.

Die erfindungsgemäßen Zusätze können entweder trocken mit dem pulverigen Halbhydrat vermischt oder im Anmachwasser gelöst werden.

Ein weiterer Vorteil des erfindungsgemäßen Verfahrens liegt u.a. auch darin, daß eine Stabilisierung des Calciumsulfat-Halbhydrates selbst dann möglich ist, wenn eine wäßrige Maische, die mit den erfindungsgemäßen Stabilisatoren behandelt wurde, abfiltriert und getrocknet wird. Beim Wiederanmaischen des entstehenden Pulvergipses bleibt die ursprünglich eingestellte Stabilisierung erhalten.

Wird von einer direkt aus dem Autoklaven kommenden Calciumsulfat-Halbhydrat-Suspension ausgegangen, so empfiehlt es sich, die Zusätze in einer kleinen Menge Wasser zu lösen und der Gipssuspension zuzugeben.

Je nach Art des Pyrophosphates und des Metallchlorids und der zugesetzten Menge die wäßrige Maische so stabilisiert werden, daß der Abbindevorgang unterbleibt und die Masse rühr- und pumpfähig bleibt.

Auch beim Abkühlen der aus dem Autoklaven austretenden Maische unterbleibt der Abbindevorgang, wenn sofort die erfindungsgemäßen Zusätze in die Maische eingerührt werden. Im Gegensatz zu den bekannten Verzögeren wird die Versteifung nicht nur verlangsamt, sondern tritt überhaupt nicht ein — zumindest nicht in für die praktische Anwendung relevanten Zeiträumen, also Wochen oder sogar Monaten.

Es handelt sich dabei auch nicht um einen "schleichenden" Abbindeeffekt, sondern um eine echte Stabilisierung einer Calciumsulfat-Halbhydrat-Maische, wie die Konstanz des Kristallwassergehaltes des eingesetzten Halbhydrates auch nach langer Lagerzeit zeigt.

Ab dem Zeitpunkt der Säurezugabe verhält sich eine erfindungsgemäß stabilisierte Suspension wie eine frisch bereitete Wasser-Calciumsulfat-Halbhydrat-Maische ohne Zusätze und bindet demzufolge innerhalb der üblichen Zeiten zu festem Calciumsulfat-Dihydrat ab. Durch die Menge der zugegebenen Säure kann die Zeit zwischen Säurezugabe und Versteifungsanfang für alle Anwendungsgebiete beliebig eingestellt werden.

Die physikalischen Eigenschaften der abgebundenen Dihydratmasse werden durch die Stabilisatoren nicht verändert. Dichte und insbesondere die Biegezug- und Druckfestigkeit erreichen dieselben Werte wie Produkte, die ohne vorherige Stabilisierung hergestellt wurden.

Durch die erfindungsgemäßen Maßnahmen werden sowohl der Herstellungsprozeß von Calciumsulfat-Halbhydrat als auch die Nachfolgeoperationen wesentlich verbessert und erleichtert sowie neue Anwendungsgebiete für das Halbhydrat erschlossen.

Bisher mußten bei technischen Störungen die Autoklaven und alle Behälter und Rohrleitungen, die Calciumsulfat-Halbhydrat führten, sofort entleert werden.

Die aus dem Autoklaven abgezogene Halbhydrat-Maische mußte dann entweder über beheizte Trennapparate (Zentrifuge, Filter) in Feststoff und Flüssigkeit getrennt werden und in Trocknungsanlagen zu Pulvergips getrocknet oder auf nassem Weg im Gießverfahren sofort zu Bauteilen weiterverarbeitet werden.

Durch Verwendung der erfindungsgemäßen Stabilisatoren kann nunmehr die Calciumsulfat-Halbhydrat-Maische auch bei Raumtemperatur über sehr lange Zeit aufbewahrt werden. Damit wird es möglich, Calciumsulfat-Halbdydrat-Maische auch in einfachen Behältern zu transportieren und nicht nur direkt am Herstellungsort, sondern erst später, z.B. auf Baustellen zu verwenden, ohne den energiereichen, apparatemäßig komplizierten und unwirtschaftlichen Weg über Pulvergips gehen zu müssen.

So wird es beispielsweise durch die erfindungsgemäße Arbeitsweise möglich, eine Calciumsulfat-Halbhydrat-Suspension nach DE—A—2 557 594 mit einem Tensidgemisch und einem Phosphorsäureester zu versetzen und als selbstnivellierende Baustoffmasse zu verwenden. Sowohl Transport als auch Einbringen der stabilisierten Baustoffmasse in Gebäude kann darauf in beliebig langen Zeiträumen erfolgen. Zu jedem gewünschten Zeitpunkt kann dann durch Zugabe der Säure — entweder durch Zumischung vor dem Vergießen oder durch Aufsprühen auf die nivellierte Baustoffmasse- die Stabilisierung aufgehoben werden, so daß die Baustoffmasse innerhalb kurzer Zeit zu Dihydrat abbindet.

Ebenso vorteilhaft kann eine erfindungsgemäß stabilisierte Halbhydrat-Maische als Ausgangsmaterial für das in der DE—A—2 524 427 beschriebene Verfahren zur Herstellung von porösen Bauteilen verwendet werden. Während die stabilisierte Maische ein homogenes Vermischen mit einem separat hergestellten Schaum ermöglicht, bzw. durch direkte Zugabe der schaumbildenden Mittel und Schäumung durch intensives Rühren, wird später durch entsprechende Zugabe der Säure die Stabilisierung aufgehoben, wobei die Menge dieser Säure so bemessen ist, daß der Versteifungsanfang sehr rasch eintritt und ein Zusammenfallen des Schaumes vermieden wird. Auf diese Weise können poröse Gipsmassen mit geringem Raumgewicht und hohen Festigkeiten hergestellt werden.

Die Erfindung sei nunmehr anhand von Beispielen erläutert.

Beispiel 1

1000 g eines aus Naturgips gewonnenen, handelsüblichen Hartgipses mit einem Wassergipswert von 0,4 und einem Kristallwassergehalt von 6,25% werden mit 3 g $Na_2H_2P_2O_7$ un 1,5 g $AlCl_3$ innig vermischt und anschließend in 400 g Wasser eingerührt. Der pH-Wert der Suspension beträgt 3,8.

Auch nach 285 Stunden ist diese Suspension sehr gut fließfähig. Der Kristallwassergehalt des abfiltrierten und mit reichlich Alkohol gewaschenen Feststoffes beträgt 6,3%. Durch Zusatz von soviel $H_2SO_4$ wie nötig ist, um eine pH-Wertsenkung in der Maische von 1,5 zu erreichen, wird die Stabilisierung beendet und es tritt nach 14 Minuten der Versteitungsanfang ein, während das Versteifungsende ca. 40 Minuten nach Säurezugabe folgt.

Die an Prüfkörpern gemessenen Druck- und Biegezugfestigkeiten betragen: 26,4 und 8,7 N/mm².

### Beispiel 2

In 1 l Wasser werden 4 g $(NH_4)_2H_2P_2O_7$ und 1,6 g $FeCl_3$ gelöst. In diese Lösung werden unter Rühren 1600 g Stuckgips mit einem Kristallwassergehalt von 5,9% eingetragen und 8 Tage langsam gerührt. Auch nach dieser Zeit ist die Mischung rühr- und fließfähig. Der pH-Wert der Maische beträgt 2,7. Der Kristallwassergehalt des abgestoppten Halbhydrates beträgt 6,1%. Durch Zugabe von 10 ml Salpetersäure, was eine pH-Wertsenkung von 1,5 bewirkt, bindet die Maische nach 17 Minuten ab und ist nach weiteren 28 Minuten vollständig erhärtet. Die an Prüfkörpern gemessenen Druck- und Biegezugfestigkeiten betragen: 14,7 und 5,7 N/mm². Rührt man zum Vergleich dieselbe Menge Stuckgips in 1 l reinem Wasser an, tritt der Versteifungsanfang bereits nach 20 Minuten ein.

Die Druckfestigkeit eines Probekörpers beträgt 15,1 N/mm², die Biegezugfestigkeit 5,5 N/mm².

### Beispiele 3 bis 16

Bei der Herstellung von Naßphosphorsäure als Nebenprodukt anfallender Gips wird in bekannter Weise in einem Druckbehälter zu Calciumsulfonat-$\alpha$-Halbhydrat umgesetzt und die Maische anschließend ohne Abkühlung in einer Zentrifuge auf ein Gips-Wasser-Gewichtsverhältnis von 2,0 bis 2,75:1 eingeengt. Diese heiße Zentrifugenmaische mit dem abbinde-fähigen Calciumsulfat-$\alpha$-Halbhydrat ist Aus-gangsmaterial für die nachfolgende Ver-suchsreihe.

Ausblühungserscheinungen wurden nach dreimaligen Befeuchten und Trocknen der Pro-bekörper nicht festgestellt.

| Beispiel Nr. | Gew.-Verhältnis $CaSO_4 \cdot 1/2\ H_2O$ zu $H_2O$ | Stabilisatoren, Mengen bezogen auf $CaSO_4 \cdot 1/2\ H_2O$ in Gew % | Keine Veränderung der Maische feststellbar in | Aufhebung der Stabilisierung nach | Säure |
|---|---|---|---|---|---|
| 3 | 2,0 | Vergleichsbeispiel: ohne Stabilisator | | | |
| 4 | 2,0 | 0,7 % $Na_3HP_2O_7$+ 0,35% $CrCl_3$ | 2040 h | 185 h | $H_2SO_4$ |
| 5 | 2,0 | ,, | 2040 h | 353 h | $H_2SO_4$ |
| 6 | 2,0 | ,, | 2040 h | 696 h | HCl |
| 7 | 2,5 | 0.5 % $K_4P_2O_7$ + 0,01% $AlCl_3$ | 1880 h | 528 h | HCl |
| 8 | 2,5 | ,, | 1880 h | 1024 h | HF |
| 9 | 2,5 | ,, | 1880 h | 1376 h | $HNO_3$ |
| 10 | 2,0 | 1,0 % $Cu_2P_2O_7$ + $AlCl_3$ | 1250 h | 428 h | $H_3PO_4$ |
| 11 | 2,75 | 0,8 % $Fe_2H_2P_2O_7$ + 0,4 % $FeCl_3$ | 576 h | 316 h | HCl |
| 12 | 2,0 | 0,4 % $Na_2H_2P_2O_7$ + 0,02% $AlCl_3$ | 1400 h | 96 h | HCl |
| 13 | 2,0 | ,, | 1400 h | 96 h | HCl |
| 14 | 2,0 | ,, | 1400 h | 96 h | HCl |
| 15 | 2,0 | ,, | 1400 h | 96 h | HCl |
| 16 | 2,0 | ,, | 1400 h | 96 h | HCl |

| Beispiel Nr. | pH-Wert der Maische vor Zugabe | pH-Wert der Maische nach Zugabe | Versteifungs- anfang nach Zu- gabe der Säure | Versteifungs- ende nach Zu- gabe der Säure | Druckfestigkeit N/mm² | Biegezugfestigkeit N/mm² |
|---|---|---|---|---|---|---|
| 3 | — | — | 25' * | 40' * | 17,6 | 6,7 |
| 4 | 2,9 | 1,0 | 36' | 65' | 18,4 | 8,5 |
| 5 | | 1,1 | 46' | 70' | 16,9 | 6,8 |
| 6 | | 0,8 | 7' | 30' | 17,8 | 6,5 |
| 7 | 2,9 | 1,0 | 15' | 45' | 17,5 | 6,9 |
| 8 | | 1,0 | 14' | 35' | 16,8 | 6,4 |
| 9 | | 2,5 | 80' | 95' | 16,7 | 6,3 |
| 10 | 2,4 | 1,2 | 105' | 140' | 18,0 | 7,2 |
| 11 | 2,1 | 0,9 | 17' | 28' | 17,3 | 6,7 |
| 12 | 2,5 | 1,7 | 240' | 280' | 18,2 | 7,2 |
| 13 | | 1,3 | 17' | 53' | 17,8 | 7,2 |
| 14 | | 1,1 | 15' | 50' | 17,2 | 6,8 |
| 15 | | 0,9 | 7' | 28' | 16,8 | 6,4 |
| 16 | | 0,8 | 5' | 25' | 17,4 | 6,8 |

*keine Zugabe einer Säure im Vergleichsbeispiel

0 001 591

## Patentansprüche

1. Verfahren zur Herstellung von gezielt abbindenden wäßrigen Calciumsulfat-Halbhydrat-Suspensionen, dadurch gekennzeichnet, daß man entweder Calciumsulfat-Halbhydrat mit 0,01 bis 2 Gewichts% Pyrophosphat, gerechnet als Pyrophosphationen, und 0,01 bis 1 Gewichts% von Chloriden dreiwertiger Metalle vermischt und mit Wasser zu einer abbindefähigen Calciumsulfat-Halbhydrat-Suspension anmaischt oder einer vorliegenden, abbindefähigen wäßrigen Calciumsulfat-Halbhydrat-Suspension die genannten Mengen an Pyrophosphaten und Chloriden, bezogen auf das Calciumsulfat-Halbhydrat, zumischt, dadurch das Abbinden der Calciumsulfat-Halbhydrat-Suspension unterbindet und man erst nach einer gewünschten Zeit das Abbinden des Calciumsulfat-Halbhydrates auslöst, indem man den pH-Wert des erhaltenen Gemisches durch Zugabe von Säuren um mehr als 0,3 pH erniedrigt.

2. Verfahren nach Anspruch 1, dadurch gekennzeichnet, daß man, bezogen auf Calciumsulfat-Halbhydrat, 0,1 bis 1,0 Gewichts% der Pyrophosphate einsetzt.

3. Verfahren nach Anspruch 1 oder 2, dadurch gekennzeichnet, daß man, bezogen auf Calciumsulfat-Halbhydrat, 0,05 bis 0,1 Gewichts% der genannten Chloride einsetzt.

4. Verfahren nach einem der Anspruche 1 bis 3, dadurch gekennzeichnet, daß man Pyrophosphate des Ammoniums, Natriums, Kaliums, Calciums, Magnesiums, Eisens II, Kupfers, Zinks oder ein Gemisch aus diesen Pyrophosphaten einsetzt.

5. Verfahren nach einem der Ansprüche 1 bis 4, dadurch gekennzeichnet, daß man als Chloride dreiwertiger Metalle solche des Aluminiums, Eisens III, Chroms III oder ein Gemisch aus diesen Chloriden einsetzt.

6. Verfahren nach einem der Ansprüche 1 bis 5, dadurch gekennzeichnet, daß man die Säuren dem erhaltenen Gemisch in solchen Mengen zusetzt, daß dessen pH-Wert um 0,3 bis 2,3 erniedrigt wird.

7. Verfahren nach einem der Ansprüche 1 bis 6, dadurch gekennzeichnet, daß man als Säuren Phosphorsäure, Schwefelsäure, Salpetersäure oder Salzsäure einsetzt.

8. Verwendung von gezielt abbindenden Calciumsulfat-Halbhydrat-Suspensionen, hergestellt nach einem Verfahren gemäß einem der Ansprüche 1 bis 7, als Baumasse für selbstnivellierende Estriche.

9. Verwendung von gezielt abbindenden Calciumsulfat-Halbhydrat-Suspensionen, gewonnen nach einem Verfahren gemäß einem der Ansprüche 1 bis 7, zur Herstellung von porösen Gipsmassen.

## Claims

1. Process for the manufacture of aqueous calcium sulphate hemihydrate suspensions having tailor-made setting properties, wherein either calcium sulphate hemihydrate is mixed with 0.01 to 2% by weight of pyrophosphate, calculated as pyrophosphate ions, and 0.01 to 1% by weight of a chloride of a trivalent metal and is made with water to give a calcium sulphate hemihydrate suspension capable of setting, or the said quantities of pyrophosphates and chlorides, based on the calcium sulphate hemihydrate, are mixed to an aqueous calcium sulphate hemihydrate suspension capable of setting, so as to initially interrupt the setting of the calcium sulphate hemihydrate suspension and then, after a preselected period of time, to initiate the setting of the calcium sulphate hemihydrate by lowering the pH-value of the mixture obtained by more than 0.3 by the addition of one or more acids.

2. Process as claimed in claim 1, wherein the pyrophosphates are used in a proportion of 0.1 to 1.0% by weight, based on calcium sulphate hemihydrate.

3. Process as claimed in claim 1 or 2, wherein the chlorides are used in a proportion of 0.05 to 0.1% by weight, based on calcium sulphate hemihydrate.

4. Process as claimed in any of claims 1 to 3, wherein a pyrophosphate of ammonium, sodium, potassium, calcium, magnesium, iron-II, copper, zinc or a mixture of these pyrophosphates is used.

5. Process as claimed in any of claims 1 to 4, wherein the trivalent metal chorides comprise aluminium chloride, iron-III chloride, chromium-III chloride or a mixture thereof.

6. Process as claimed in any of claims 1 to 5, wherein the acids are added to the mixture obtained in the quantities necessary for the pH-value of the mixture to be lowered by 0.3 to 2.3.

7. Process as claimed in any of claims 1 to 6, wherein phosphoric acid, sulphuric acid, nitric acid or hydrochloric acid is used.

8. Calcium sulphate hemihydrate suspensions having tailor-made setting properties whenever made by a process as claimed in claims 1 to 7, and used as a building compound for self-levelling floor covering layers.

9. Calcium sulphate hemihydrate suspensions having tailor-made setting properties whenever obtained by a process as claimed in any of claims 1 to 7, and used for the manufacture of porous gypsum compositions.

## Revendications

1. Procédé de préparation de suspensions aqueuses d'hémihydrate du sulfate de calcium capables de prendre à un moment quelconque, caractérisé en ce que l'on mélange l'hémihydrate du sulfate de calcium avec 0,01 à 2% en poids de pyrophosphate, exprimé en ions pyrophosphate, et 0,01 à 1% en poids de chlorures de métaux trivalents, et on forme une suspension d'hémihydrate de sulfate de calcium capable de prendre par gâchage avec de l'eau, ou bien on mélange à une suspension aqueuse existante d'hémidydrate de sulfate de calcium capable de prendre les quantités indiquées de pyrophosphate et de chlorures, par rapport à l'hémihydrate du sulfate de calcium, empêchant ainsi la prise de la suspension d'hémihydrate de sulfate de calcium, et on déclenche, au moment voulu, la prise de l'hémihydrate de sulfate de calcium en abaissant le pH du mélange de plus de 0,3 unité de pH par addition d'acide.

2. Procédé selon la revendication 1, caractérisé en ce que l'on utilise de 0,1 à 1,0% en poids de pyrophosphates par rapport à l'hémihydrate du sulfate de calcium.

3. Procédé selon la revendication 1 ou 2, caractérisé en ce que l'on utilise de 0,05 à 0,1% en poids des chlorures mentionnés par rapport à l'hémihydrate du sulfate de calcium.

4. Procédé selon l'une des revendications 1 à 3, caractérisé en ce que l'on utilise des pyrophosphates de l'ammonium, du sodium, du potassium, du calcium, du magnésium, du fer-II, du cuivre, du zinc ou un mélange de ces pyrophosphates.

5. Procédé selon l'une des revendications 1 à 4, caractérisé en ce que l'on utilise, en tant que chlorures de métaux trivalents ceux de l'aluminium, du fer-III, du chrome-III, ou un mélange de ces chlorures.

6. Procédé selon l'une des revendications 1 à 5, caractérisé en ce que l'on ajoute les acides au mélange en quantités telles que le pH du mélange soit abaissé de 0,3 à 2,3 unités.

7. Procédé selon l'une des revendications 1 à 6, caractérisé en ce que l'on utilise en tant qu'acides l'acide phosphorique, l'acide sulfurique, l'acide nitrique ou l'acide chlorhydrique.

8. Utilisation des suspensions d'hémihydrate de sulfate de calcium capable de prendre à un moment quelconque, préparées par un procédé selon l'une des revendications 1 à 7, comme masses de construction pour des enduits autonivelants.

9. Utilisation des suspensions d'hémihydrate de sulfate de calcium capables de prendre à un moment quelconque, obtenues par un procédé selon l'une des revendications 1 à 7, pour la fabrication de masses de plâtre poreuses.